Europäisches Patentamt

European Patent Office

Office européen des brevets

(11) Numéro de publication : **0 060 366**
**B1**

# FASCICULE DE BREVET EUROPÉEN

(45) Date de publication du fascicule du brevet :
28.11.84

(51) Int. Cl.³ : **A 01 D 85/00, A 01 F 15/00**

(21) Numéro de dépôt : **81400343.0**

(22) Date de dépôt : **06.03.81**

(54) **Dispositif de commande de liage pour presses à balles cylindriques.**

(43) Date de publication de la demande :
**22.09.82 Bulletin 82/38**

(45) Mention de la délivrance du brevet :
**28.11.84 Bulletin 84/48**

(84) Etats contractants désignés :
**DE FR GB IT NL**

(56) Documents cités :
**FR-A- 2 414 295**
**FR-A- 2 457 636**
**US-A- 4 150 614**

(73) Titulaire : **JOHN DEERE (Société Anonyme)**
**8, Quai de la Madeleine**
**F-45000 Orléans (FR)**

(72) Inventeur : **Coeffic, Jean-Pierre**
**8, avenue Maréchal Lyautey**
**F-70100 Gray (FR)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

### Description

La présente invention concerne d'une façon générale les presses à balles cylindriques et plus particulièrement un dispositif de commande de liage pour les presses de ce type. Les presses à balles cylindriques sont d'un type général bien connu. Elles comprennent des jeux de bandes ou courroies qui par leur déplacement forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un dispositif comprenant un organe guide-ficelle déplacé pendant l'opération de liage en un mouvement de va-et-vient transversalement à la presse, par exemple devant l'orifice d'entrée des produits récoltés à partir du champ. La ficelle, qui provient d'une réserve appropriée, est guidée par cet organe et son extrémité est saisie par les produits de récolte constituant la balle à la fin de l'opération de formation de celle-ci, de sorte qu'elle est enroulée autour de cette balle sous l'effet de la rotation de cette dernière entre les bandes ou courroies et que ce mouvement d'enroulement se conjugue à une répartition des spires de ficelle ainsi formées sur la longueur de la balle du fait du mouvement de balayage transversal résultant du déplacement de l'organe guide-ficelle.

Divers moyens ont déjà été proposés pour commander le mouvement de balayage transversal de l'organe guide-ficelle. Ainsi, il est connu d'assurer cette commande par un vérin ou cylindre hydraulique ou de provoquer le mouvement requis sous l'effet de la traction exercée sur la ficelle de liage lors de son enroulement autour de la balle.

L'utilisation d'un vérin hydraulique exige sur la presse la présence de tuyaux flexibles et d'un accouplement avec une source de liquide sous pression, telle qu'une pompe prévue sur le tracteur à laquelle la presse est attelée. Des tuyaux hydrauliques avec leurs accouplements peuvent être à l'origine de fuites.

Bien que la commande du balayage transversal sous l'effet de la traction exercée par la ficelle se soit affirmée dans la pratique, il semble dans certains cas désirable de réaliser une commande positive de ce mouvement par d'autres moyens.

On a également déjà proposé de commander le déplacement d'un organe guide-ficelle sur une presse par des moyens électriques.

Ainsi, on a décrit dans la demande de brevet français 2 457 636 un mécanisme de liage pour presses à balles cylindriques ou rondes comportant des bras guide-ficelle animés d'un mouvement de va-et-vient transversalement à la presse et dont le déplacement est commandé par un dispositif électrique tel qu'un moteur électrique. Il est prévu dans ce cas deux circuits pour l'alimentation du moteur avec des polarités inverses selon le sens de déplacement désiré des bras guide-ficelle. Ces circuits sont excités par la manœuvre dans un sens ou dans l'autre d'un inverseur bipolaire. Un tel mécanisme exige toutefois une intervention manuelle pour la commande de l'inverseur, qui doit occuper chaque position requise pendant toute la course désirée des bras.

On a décrit par ailleurs, dans la demande de brevet français 2 414 295 un procédé et un dispositif de liage pour presses à balles cylindriques comportant un organe ou bras guide-ficelle déplacé en va-et-vient transversalement à la presse sous l'action d'un moto-réducteur électrique dont l'alimentation en courant est interrompue quand l'organe guide-ficelle a atteint sa position de fin de course. Toutefois, dans ce cas, du fait qu'il est prévu un moto-réducteur électrique tournant toujours dans le même sens, l'inversion de mouvement requise pour le bras guide-ficelle exige des organes de renvoi mécaniques qui compliquent le système.

Le but de l'invention est d'apporter des perfectionnements aux dispositifs de commande de ce type et de créer un dispositif de commande électrique du liage assurant, après le déclenchement de l'opération de liage, un déroulement automatique de cette opération dans des conditions optimales.

L'invention est matérialisée dans un dispositif de commande de liage pour presses à balles cylindriques du type comprenant un organe guide-ficelle déplaçable transversalement à la presse en un mouvement de va-et-vient pendant le liage, notamment devant l'orifice d'entrée des produits de récolte, et un dispositif électrique de déplacement de cet organe, alimenté à partir d'une source de courant électrique par un premier circuit pour l'actionnement dans un sens de ce dispositif électrique de déplacement de l'organe fuide-ficelle et par un second circuit pour l'actionnement de ce dispositif de déplacement dans l'autre sens, afin de pouvoir provoquer le mouvement de va-et-vient désiré de cet organe guide-ficelle, caractérisé en ce qu'il comprend un premier et un second relais dont les éléments de contact sont prévus respectivement dans ce premier et ce second circuit, des circuits d'excitation sélective de ces relais, un interrupteur de commande principal du type à fermeture momentanée, un premier contacteur normalement fermé quand l'organe guide-ficelle se trouve à une première extrémité de sa course, l'interrupteur et ce premier contacteur étant montés dans le circuit d'excitation du premier relais de façon à assurer l'alimentation du dispositif de déplacement dans le premier sens quand cet interrupteur principal est fermé, par l'intermédiaire de ce premier relais, pour déclencher le liage de la balle, des moyens pour ouvrir ce premier contacteur quand l'organe guide-ficelle parvient à l'autre extrémité de sa course, un second contacteur fermé quand cet organe guide-ficelle parvient à cette autre extrémité de sa course, un troisième relais excité lors de la fermeture de ce second contacteur et dont l'élément de contact est monté dans le circuit d'excitation de ce second relais de manière à fermer ledit second relais lors de la fermeture du second contacteur et permettre l'alimentation de ce second circuit et provoquer ainsi le déplacement de l'organe guide-ficelle dans l'autre sens sous l'effet du dispositif électrique de déplacement, des moyens d'ouverture du circuit d'excitation du troisième relais quand l'organe guide-ficelle est revenu à la première extrémité de sa course et des moyens d'auto-maintien des premier et troisième relais en position fermée pendant le liage et le déplacement dudit organe.

Suivant un mode de réalisation paraissant avantageux, le premier et le second contacteur sont réunis en un ensemble unitaire, afin que le second contacteur soit fermé par les moyens précités lors de l'ouverture du premier contacteur et réciproquement.

Suivant une autre particularité, le troisième relais est un relais temporisé monté en série avec le second contacteur.

Suivant une autre particularité encore, il est prévu dans le circuit d'excitation de ce relais temporisé un troisième contacteur qui ouvre ledit relais et en conséquence le circuit d'alimentation du dispositif électrique de déplacement quand l'organe guide-ficelle est revenu à la première extrémité de sa course.

En outre, il est nécessaire de couper la ficelle de liage avant d'arrêter le mouvement de l'organe guide-ficelle. Suivant une autre particularité, il est donc prévu en combinaison avec l'organe guide-ficelle un organe de coupe qui est relié par un élément flexible au troisième contacteur de façon telle que l'ouverture de ce troisième contacteur n'ait lieu qu'après l'actionnement de l'organe de coupe.

La commande de l'interrupteur principal peut être de type manuel. Dans ce cas, le conducteur du tracteur auquel la presse est attelée actionne cet interrupteur principal à la main quand la balle a atteint dans la chambre de la presse de diamètre requis pour son liage. Mais cette commande peut également être automatique. Dans ce cas, il est prévu sur la presse un organe détecteur qui peut par exemple être constitué par un élément disposé de façon connue dans le trajet d'un organe déplacé en fonction de l'augmentation de diamètre de la balle cylindrique, notamment d'un organe relié à l'un des rouleaux mobiles de guidage des bandes ou courroies, et actionné quand cette balle atteint sensiblement son diamètre maximum pour déclencher le liage.

On comprend que le dispositif de commande qui fait l'objet de l'invention n'exige entre le tracteur et la presse que des conducteurs électriques, qui peuvent d'ailleurs être réunis en câbles multiples et qui sont capables de supporter pendant de longues périodes de temps les conditions de travail souvent rudes des machines agricoles de ce type. La commande de l'organe guide-ficelle s'effectue alors d'une façon positive dans les deux sens, et ledit organe est retenu également de façon positive dans chacune de ses positions de fin de course par le dispositif électrique de déplacement utilisé.

Ce dispositif peut être de n'importe quel type approprié. Il peut comporter notamment un moteur électrique dont l'élément de sortie entraîne par exemple un système à pignon et crémaillère, ou bien un système à vis sans fin de type quelconque. Mais il va de soi également qu'un dispositif de déplacement d'un autre type, tel qu'un moteur linéaire, pourrait être utilisé si désiré.

L'organe guide-ficelle peut lui-même être de type quelconque. Ce peut être un bras monté de façon pivotante sur la presse et dont l'extrémité de sortie de la ficelle effectue un mouvement de balayage transversal pour le liage, ou bien un organe analogue à un chariot déplacé sur un guide monté transversalement à la presse, par exemple sur une vis-mère par l'intermédiaire d'une partie formant écrou, l'entraînement de cette vis-mère dans un sens ou dans l'autre provoquant le déplacement en va-et-vient de cet organe guide-ficelle.

L'invention concerne encore les presses à balles cylindriques équipées d'un dispositif tel que défini ci-avant.

La description qui va suivre, faite en regard des dessins annexés, donnés à titre non limitatif, permettra de mieux comprendre l'invention.

La Figure 1 est une vue de profil d'une presse à balles cylindriques avec bras guide-ficelle pivotant, à laquelle l'invention peut être appliquée.

La Figure 2 est une représentation schématique d'un mode de réalisation possible de l'invention.

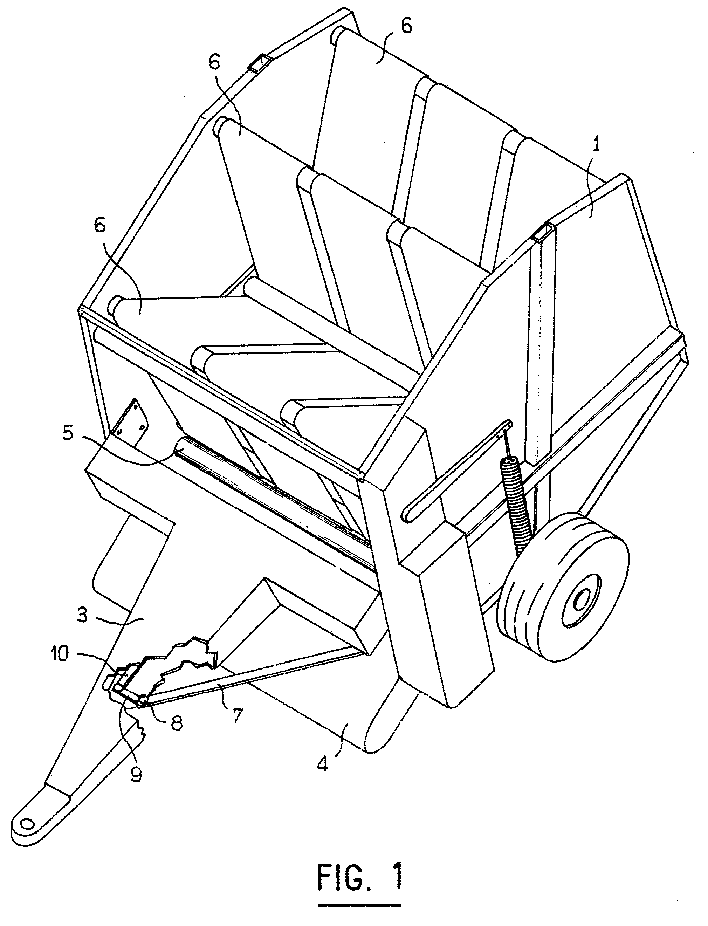

On a représenté sur la Fig. 1 une presse à balles cylindriques de type classique, comportant un corps 1 supporté par un châssis équipé de roues 2, la presse étant destinée à être attelée à un tracteur au moyen d'un timon 3. Un ramasseur représenté schématiquement en 4 est prévu de façon classique à la partie avant du corps 1 de la presse, de manière à ramasser les produits de récolte, tels que du fourrage, sur le champ et à les amener à un orifice ménagé de façon usuelle entre des rouleaux dont seul un rouleau 5 est représenté, pour leur pénétration dans une chambre prévue à l'intérieur du corps de la presse et dans laquelle une balle cylindrique se forme par enroulement de la nappe de produits entre des bandes ou courroies 6 entraînées dans le sens approprié.

L'agencement des presses à balles cylindriques de ce type est bien connu.

Sur la Fig. 1, on a indiqué schématiquement en 7 un bras guide-ficelle qui est monté à pivotement en 8 sur une partie de la presse. Ce bras reçoit la ficelle de la façon usuelle à partir d'une boîte à ficelle prévue sur la presse et assure son guidage par une partie tubulaire afin, lors de son mouvement de balayage transversalement à la presse par pivotement autour du point 8, de répartir la ficelle sur la largeur de la presse pour former des spires autour de la balle cylindrique lors de son liage, également d'une façon en soi classique.

Dans le cas de l'agencement considéré, le bras guide-ficelle 7 est angulairement solidaire d'un levier 9 qui, de son côté, est relié à un élément 10 d'un dispositif électrique de déplacement 11.

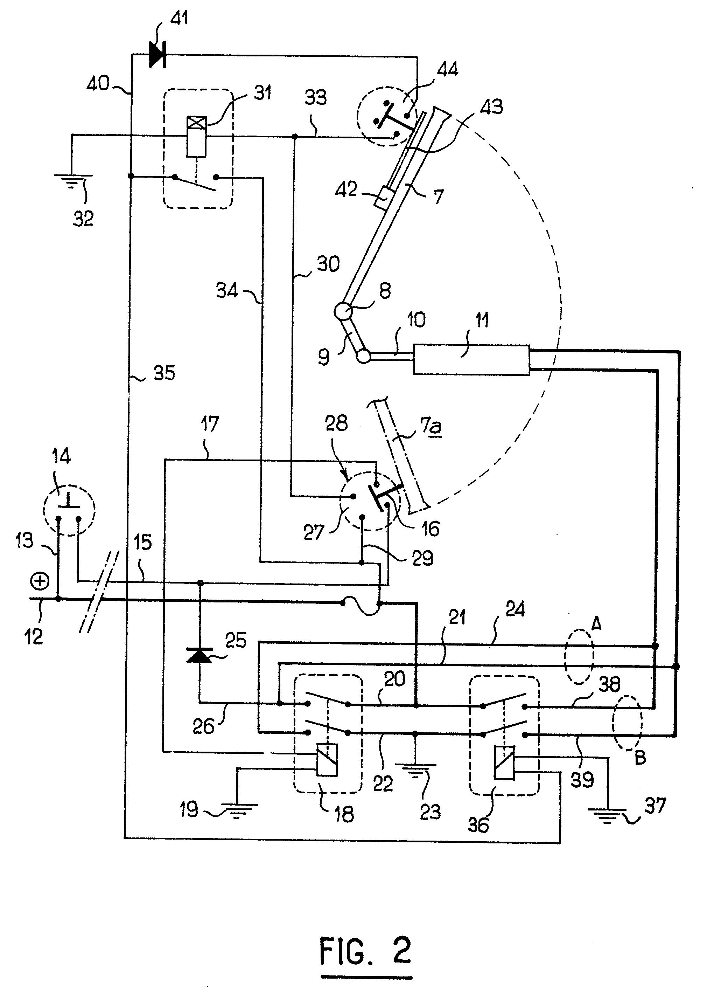

Ce dispositif a été représenté de façon schématique sur la Fig. 2. Comme indiqué précédemment, il peut être de tout type désiré, comprenant par exemple un moteur électrique assurant l'entraînement de l'élément 10, notamment par un système à pignon et crémaillère, à vis-mère et écrou, à roue dentée et vis sans fin, etc...

On décrira maintenant le système électrique qui fait l'objet de l'invention en se reportant à la Fig. 2. On a indiqué en 12 un conducteur principal relié à une source d'énergie électrique qui peut être une batterie prévue sur le tracteur ou sur la presse elle-même. Ce conducteur principal est relié par un conducteur 13 à un interrupteur principal indiqué en 14. Cet interrupteur principal est du type à fermeture momentanée. Il peut être à commande manuelle ou bien à commande automatique. Il sert à déclencher l'opération de liage. Son actionnement automatique peut être assuré de façon connue quand la balle cylindrique a atteint le diamètre voulu pour le liage, notamment par un élément relié à un rouleau de la presse déplacé au fur et à mesure de l'augmentation de diamètre de la balle.

L'autre côté de l'interrupteur principal 14 est relié par un conducteur 15 à un contact d'un premier contacteur 16 dont l'autre contact est relié par un conducteur 17 à un relais 18 qui est mis à la masse en 19. Les bras de contact de ce relais, qui sont fermés lors de l'excitation du relais 18, sont montés entre un conducteur 20 relié au conducteur 12 et un conducteur 21, d'une part, et entre un conducteur 22 mis à la masse en 23 et un conducteur 24, d'autre part. Une diode 25 est montée dans un conducteur 26 reliant les conducteurs 21 et 15 afin de s'opposer au passage du courant du conducteur 15 vers le conducteur 21 tout en permettant ce passage en sens opposé pour une raison qui sera indiquée plus loin.

Les conducteurs 21 et 24 forment un premier circuit A. Ils sont reliés comme montré aux deux bornes du dispositif électrique de déplacement 11, par exemple du moteur électrique. Il est prévu, en combinaison avec le premier contacteur 16, un second contacteur 27. Comme indiqué schématiquement sur la Fig. 2, les contacteurs 16 et 27 forment un contacteur double 28 agencé de façon telle que le contacteur 16 soit fermé quand le contacteur 27 est ouvert, et inversement. Un contact du contacteur 27 est relié par un conducteur 29 au conducteur 12, et son autre contact est relié par un conducteur 30, d'une part à un relais temporisé 31 dont l'autre côté est mis à la masse en 32, et d'autre part par un conducteur 33 à un contact d'un troisième contacteur 44.

Le bras de contact du relais 31 est monté entre un conducteur 34 relié au conducteur 29 et un conducteur 35 qui de son côté est relié à un relais 36 dont l'autre côté est mis à la masse en 37. Les bras de contact du relais 36 sont montés respectivement entre le conducteur 20 et un conducteur 38, et entre le conducteur 22 et un conducteur 39. On voit sur la Fig. 2 que les conducteurs 38 et 39, qui forment un circuit B, sont reliés respectivement aux conducteurs 24 et 21 et ainsi au dispositif électrique de déplacement 11. On constate toutefois que les connexions avec ce dispositif 11 à partir des bras de contact des relais 18 et 36 sont inversées, de sorte que, selon que l'un ou l'autre de ces relais est excité, le dispositif 11 va être alimenté avec des polarités inversées.

Un conducteur 40 dans lequel est montée une diode 41 relie le conducteur 35 au deuxième contact du contacteur 44, cette diode permettant le passage du courant de ce conducteur 35 vers ce contacteur 44.

Le mode de fonctionnement du système électrique qui vient d'être décrit est le suivant :

Comme indiqué précédemment, l'interrupteur principal 14 est fermé pour déclencher l'opération de liage. Au début de l'opération, le guide-ficelle se trouve dans la position indiquée en 7 sur la Fig. 2. Comme indiqué schématiquement, ce bras guide-ficelle porte une barre 42 de commande d'un couteau destiné à sectionner la ficelle et à retenir son extrémité en fin de liage, de la façon classique. Cette barre 42 porte ici une lame flexible 43 qui, comme montré, maintient alors le contacteur 44 dans sa condition d'ouverture. Par contre, le contacteur 16 est fermé dans cette condition.

Lors de la fermeture momentanée de l'interrupteur principal 14, un circuit est établi par les conducteurs 12, 13, l'interrupteur principal 14, le conducteur 15, le contacteur 16 et le conducteur 17, pour l'excitation du relais 18. Celui-ci attire alors ses bras de contact et le circuit A d'alimentation du dispositif électrique de déplacement 11 est complété par les conducteurs 12, 20 et 21, puis au retour par les conducteurs 24 et 22, jusqu'à la masse en 23.

Le dispositif 11 actionne ainsi, par son élément 10, le levier 9, pour faire pivoter le bras guide-ficelle 7 autour du point 8 et l'amener jusque dans la position 7a, en effectuant un balayage transversal classique en face de l'orifice d'entrée de la ficelle dans la presse, pour le liage de la balle cylindrique.

Le circuit d'alimentation du dispositif électrique 11 reste fermé malgré l'ouverture de l'interrupteur principal 14 à fermeture momentanée, étant donné que le circuit d'excitation du relais 18 demeure lui-même fermé par les conducteurs 12, 20 et 26, à travers la diode 25, pour rejoindre le conducteur 15.

Quand le bras guide-ficelle atteint la position 7a, il ouvre par butée en fin de course le contacteur 16. Ceci interrompt le circuit d'excitation du relais 18, qui retombe, de sorte que le circuit A est ouvert au niveau de ce relais. Le dispositif électrique 11 s'arrête. Etant donné que les contacteurs 16 et 27 sont jumelés, l'ouverture du contacteur 16 provoque la fermeture du contacteur 27. On notera que, lorsque le bras guide-ficelle a quitté sa position de repos, le contacteur 44 s'est refermé. Ainsi, du fait de la fermeture du contacteur 27, un circuit est établi par les conducteurs 12 et 29, le contacteur 27 et le conducteur 30 pour le relais 31, qui est excité en fermant son bras de contact. Cette fermeture établit un nouveau circuit par les conducteurs 12 et 34, le bras de contact du relais 31 et le conducteur 35, pour exciter le relais 36. La fermeture des bras de contact de ce relais complète alors le circuit B par les conducteurs 12, 20 et 38, afin d'alimenter le dispositif électrique 11, le retour s'effectuant par les conducteurs 39 et 22 jusqu'à la masse en 23. Le dispositif de déplacement 11 est ainsi alimenté avec une polarité inversée par rapport à l'opération précédente et il provoque en conséquence un déplacement en sens opposé de son élément 10, pour ramener le bras guide-ficelle de la position 7a vers la position 7.

Quand le bras guide-ficelle quitte la position 7a, le contacteur 27 s'ouvre tandis que le contacteur 16 se referme. Toutefois, le relais 31 étant temporisé, le circuit d'excitation de ce relais 31 reste fermé par les conducteurs 12, 34 et 40, la diode 41, le contacteur 44 en position fermée et le conducteur 33, de sorte qu'un effet auto-maintien est obtenu pour ce relais 31 et qu'en conséquence le circuit du relais 36 reste lui-même fermé pour que le déplacement du bras guide-ficelle vers sa position de repos se poursuive.

Lorsque le bras guide-ficelle 7 atteint sa position de repos, la barre 42 provoque d'abord le sectionnement de la ficelle de liage par le couteau associé, d'une façon en soi classique, puis la lame élastique 43 agit en fin de course pour ouvrir le contacteur 44, ce qui interrompt le circuit alimentant le dispositif électrique 11 et provoque en conséquence l'arrêt du bras 7. La condition atteinte correspond à la position d'attente jusqu'à l'opération de liage suivante.

Des modifications peuvent être apportées au mode de réalisation décrit, dans le domaine des équivalences techniques, sans s'écarter de l'invention.

**Revendications**

1. Dispositif de commande de liage pour presses à balles cylindriques du type comprenant un organe guide-ficelle (7) déplaçable transversalement à la presse en un mouvement de va-et-vient pendant le liage, notamment devant l'orifice d'entrée des produits de récolte, et un dispositif électrique (11) de déplacement de cet organe, alimenté à partir d'une source de courant électrique par un premier circuit (A) pour l'actionnement dans un sens de ce dispositif électrique de déplacement de l'organe guide-ficelle et par un second circuit (B) pour l'actionnement de ce dispositif de déplacement dans l'autre sens, afin de pouvoir provoquer le mouvement de va-et-vient désiré de cet organe guide-ficelle, caractérisé en ce qu'il comprend un premier et un second relais (18, 36) dont les éléments de contact sont prévus respectivement dans ce premier et ce second circuit (A, B), des circuits électriques pouvant être alimentés à partir de la source de courant électrique pour l'excitation sélective de ces relais, un interrupteur de commande principal (14), du type à fermeture momentanée, un premier contacteur (16) normalement fermé quand l'organe guide-ficelle (7) se trouve à une première extrémité de sa course, cet interrupteur principal et ce premier contacteur étant montés dans le circuit d'excitation du premier relais (18), de façon à fermer ce premier relais et à assurer l'alimentation du dispositif de déplacement (11) dans le premier sens quand cet interrupteur principal (14) est fermé, par l'intermédiaire de ce premier relais (18), pour déclencher le liage de la balle, des moyens pour ouvrir ce premier contacteur (16) quand l'organe guide-ficelle (7) parvient à l'autre extrémité de sa course, un second contacteur (27) fermé quand cet organe guide-ficelle parvient à cette autre extrémité de sa course, un troisième relais (31) excité lors de la fermeture de ce second contacteur (27) et dont l'élément de contact est monté dans le circuit d'excitation de ce second relais (36), de manière à fermer ledit second relais lors de la fermeture de ce second contacteur et permettre l'alimentation du second circuit (B), provoquant ainsi le déplacement de l'organe guide-ficelle dans l'autre sens sous l'effet du dispositif électrique de déplacement , des moyens d'ouverture du circuit d'excitation de ce troisième relais (31) quand l'organe guide-ficelle est revenu à la première extrémité de sa course, et des moyens d'auto-maintien des premier et troisième relais (18, 31) en position fermée pendant l'opération de liage et le déplacement de l'organe guide-ficelle.

2. Dispositif suivant la revendication 1, caractérisé en ce que le premier et le second contacteur (16, 27) sont réunis en un ensemble unitaire (28), agencé de façon telle que le second contacteur (27) soit fermé quand le premier contacteur (16) est ouvert et réciproquement.

3. Dispositif suivant la revendication 1 ou 2, caractérisé en ce que le troisième relais (31) est un relais temporisé monté en série avec le second contacteur (27).

4. Dispositif suivant la revendication 3, caractérisé en ce qu'il est prévu, dans le circuit d'excitation de ce relais temporisé (31), un troisième contacteur (44) qui ouvre ledit relais et en conséquence le circuit d'excitation du second relais (36) et ainsi le circuit d'alimentation du dispositif électrique de déplacement (11) quand l'organe guide-ficelle est revenu à la première extrémité de sa course.

5. Dispositif suivant la revendication 4, caractérisé en ce qu'il est prévu, en combinaison avec ce relais temporisé (31), un circuit d'auto-maintien passant par l'élément de contact dudit relais et ce troisième contacteur (44) et comportant une diode (41) ou analogue ne permettant le passage du courant que dans un seul sens.

6. Dispositif suivant la revendication 1, caractérisé en ce que le premier et le second circuit (A, B) sont connectés au dispositif électrique (11) de déplacement du bras guide-ficelle (7) de façon à appliquer un courant électrique à ce dispositif avec des polarités inversées lors de leur excitation.

7. Dispositif suivant la revendication 1, caractérisé en ce qu'il est prévu une connexion (26) entre le premier circuit (A) et le conducteur (15) partant de l'interrupteur principal (14), pour maintenir ce premier circuit (A) dans une condition de fermeture après l'ouverture de cet interrupteur principal par un effet d'auto-maintien, une diode (25) ou analogue étant montée dans cette connexion.

8. Dispositif suivant l'une quelconque des revendications précédentes, caractérisé en ce qu'il est prévu, en combinaison avec l'organe guide-ficelle (7), un organe de coupe (42) et un élément flexible (43) agissant sur le troisième contacteur (44) après le sectionnement de la ficelle.

9. Presses à balles cylindriques équipées d'un dispositif suivant l'une quelconque des revendications 1 à 8.

**Claims**

1. A binding control apparatus for cylindrical bale presses of the type comprising a twine guide member (7) which is displaceable transversely with respect to the press with a reciprocating movement during the binding operation, in particular in front of the intake orifice for the crop products, and an electrical means (11) for displacing said member, said electrical means being supplied with power from an electrical current source by a first circuit (A) for actuating said electrical means for displacing the twine guide member in one direction and by a second circuit (B) for actuating said displacing means in the other direction in order to be able to produce the desired reciprocating movement of said twine guide member, characterised in that it comprises first and second relays (18, 36), the contact elements of which are respectively provided in said first and second circuits (A, B), electrical circuits which can be supplied with power from the electrical current source for selective energisation of said relays, a main control switch (14) of momentary closure type, a first contact-making means (16) which is normally closed when the twine guide member (7) is at a first end of its travel, said main switch and said first contact-making means being disposed in the energisation circuit of the first relay (18) so as to close said first relay and to provide for the supply of power to the means (11) for displacing said member in the first direction when said main switch (14) is closed, by way of said first relay (18), to initiate binding of the bale, means for opening said first contact-making means (16) when the twine guide member (7) reaches the other end of its travel, a second contact-making means (27) which is closed when said twine guide member reaches said other end of its travel, a third relay (31) which is energised upon closure of said second contact-making means (27) and the contact element of which is disposed in the energisation circuit of said second relay (36), so as to close said second relay upon closure of said second contact-making means and permit the supply of power to the second circuit (B), thus causing displacement of the twine guide member in the other direction under the action of the electrical displacing means, means for opening the energisation circuit of said third relay (31) when the twine guide member has returned to the first end of its travel, and means for self-holding of the first and third relays (18, 31) in the closed position during the binding operation and displacement of the twine guide member.

2. Apparatus according to claim 1, characterised in that the first and second contact-making means (16, 27) are combined in a unitary assembly (28) so arranged that the second contact-making means (27) is closed when the first contact-making means (16) is open and vice versa.

3. Apparatus according to claim 1 or claim 2, characterised in that the third relay (31) is a time-delay relay mounted in series with the second contact-making means (27).

4. Apparatus according to claim 3, characterised in that provided in the energisation circuit of said time-delay relay (31) is a third contact-making means (44) which opens said relay and in consequence the energisation circuit of the second relay (36) and thus the power supply circuit of the electrical displacing means (11) when the twine guide member has returned to the first end of its travel.

5. Apparatus according to claim 4, characterised in that, in combination with said time-delay relay (31), there is provided a self-hold circuit which goes through the contact element of said relay and said third contact-making means (44) and which comprises a diode (41) or the like which permits the current to flow only in one direction.

6. Apparatus according to claim 1, characterised in that the first and second circuits (A, B) are connected to the electrical means (11) for displacing the twine guide arm (7), so as to apply an electrical current to said means with opposite polarities upon energisation thereof.

7. Apparatus according to claim 1, characterised in that there is provided a connection (26) between the first circuit (A) and the conductor (15) from the main switch (14), to hold said first circuit (A) in a closure condition after opening of said main switch by means of a self-hold action, a diode (25) or the like being disposed in said connection.

8. Apparatus according to any one of the preceding claims, characterised in that, in combination with the twine guide member (7), there are provided a cutting member (42) and a flexible element (43) acting on the third contact-making means (44) after cutting of the twine.

9. Cylindrical bale presses provided with an apparatus according to any one of claims 1 to 8.

## Ansprüche

1. Vorrichtung zum Steuern des Bindevorganges für Pressen von zylindrischen Ballen des Typs, welcher ein Garnführungsorgan (7), welches quer zur Presse in einer hin- und hergehenden Bewegung während des Bindevorganges verstellbar ist, insb. vor des Eintrittsöffnung für die Ernteprodukte, und eine elektrische Vorrichtung (11) zum Verstellen dieses Organs umfasst, welches von einer elektrischen Stromquelle aus durch einen ersten Kreis (A) gespeist wird für eine Betätigung in einer Richtung der elektrischen Verstellvorrichtung des Garnführungsorgans und durch einen zweiten Kreis (B) zum Betätigen der Verstellvorrichtung in der anderen Richtung, um so die gewünschte hin- und hergehende Bewegung dieses Garnführungsorgans hervorrufen zu können, dadurch gekennzeichnet, dass sie ein erstes und ein zweites Relais (18, 36), deren Kontaktelemente jeweils in dem ersten und dem zweiten Kreis (A, B) vorgesehen sind, elektrische Kreise, welche von der elektrischen Stromquelle gespeist werden können, um selektiv diese Relais zu erregen, einen Hauptsteuer-Unterbrecher (14) des momentan schliessenden Typs, eine erste Kontakteinrichtung (16), welche normalerweise geschlossen ist, während sich das Garnführungsorgan (7) an dem ersten Ende seiner Bahn befindet, wobei der Hauptunterbrecher und die erste Kontakteinrichtung in dem Erregungskreis des ersten Relais (18) montiert sind, derart, dass das erste Relais geschlossen und eine Speisung der Verstelleinrichtung (11) in der ersten Richtung sichergestellt werden, wenn der Hauptunterbrecher (14) geschlossen ist, und zwar mit Hilfe des ersten Relais (18), um die Bindung des Ballens auszulösen, Mittel zum Öffnen der ersten Kontakteinrichtung (16), wenn das Garnführungsorgan (7) an dem anderen Ende seiner Bahn ankommt, eine zweite Kontakteinrichtung (27), die geschlossen ist, wenn das Garnführungsorgan an dem anderen Ende seiner Bahn ankommt, ein drittes Relais (31), das erregt wird, wenn die zweite Kontakteinrichtung (27) geschlossen ist und deren Kontaktelement in dem Erregerkreis des zweiten Relais (36) montiert ist, derart, dass das genannte zweite Relais während der Schliessung der zweiten Kontakteinrichtung geschlossen ist und die Speisung des zweiten Kreises (B) gestattet, um so die Verstellung des Garnführungsorganes in der anderen Richtung unter der Wirkung der elektrischen Verstellvorrichtung hervorzurufen, Mittel zum Öffnen des Erregerkreises des dritten Relais (31), wenn das Garnführungsorgan an das erste Ende seiner Bahn zurückgekommen ist, und Mittel umfasst, um das erste und das dritte Relais (18, 31) in der Schliessstellung während des Bindevorganges und der Verstellung des Garnführungsorgans automatisch zu halten.

2. Vorrichtung nach Anspruch 1, dadurch gekennzeichnet, dass die erste und die zweite Kontakteinrichtung (16, 27) zu einer einheitlichen Anordnung (28) vereinigt sind, welche derart wirksam ist, dass die zweite Kontakteinrichtung (27) geschlossen ist, wenn die erste Kontakteinrichtung (16) offen ist und umgekehrt.

3. Vorrichtung nach Anspruch 1 oder 2, dadurch gekennzeichnet, dass das dritte Relais (31) ein Zeitrelais ist, das in Serie mit der zweiten Kontakteinrichtung (27) montiert ist.

4. Vorrichtung nach Anspruch 3, dadurch gekennzeichnet, dass in dem Erregerkreis des Zeitrelais (31) eine dritte Kontakteinrichtung (44) montiert ist, welche das genannte Relais öffnet und folglich den Erregerkreis des zweiten Relais (36) und so den Speisekreis für die elektrische Verstellvorrichtung (11), wenn das Garnführungsorgan an das erste Ende seiner Bahn zurückgekehrt ist.

5. Vorrichtung nach Anspruch 4, dadurch gekennzeichnet, dass in Kombination mit dem Zeitrelais (31) ein automatischer Haltekreis vorgesehen ist, welcher durch das Kontaktelement des besagten Relais und die dritte Kontakteinrichtung (44) führt und eine Diode (41) oder dergleichen enthält, welche den Durchgang des Stromes nur in einer Richtung zulässt.

6. Vorrichtung nach Anspruch 1, dadurch gekennzeichnet, dass die ersten und zweiten Kreise (A, B) mit einer elektrischen Verstellvorrichtung des Garnführungsarms (7) in der Weise verbunden sind, dass sie während ihrer Erregung einen elektrischen Strom am diese Vorrichtung mit umgekehrten Polaritäten anlegen.

7. Vorrichtung nach Anspruch 1, dadurch gekennzeichnet, dass eine Verbindung (26) zwischen dem ersten Kreis (A) und dem Leiter (15) vorgesehen ist, der von dem Hauptunterbrecher (14) ausgeht, um den ersten Kreis (A) in einem Schliesszustande nach Öffnen dieses Hauptunterbrechers durch einen automatischen Halteeffekt zu halten, wobei eine Diode (25) oder dergleichen in dieser Verbindung angeordnet ist.

8. Vorrichtung nach irgendeinem der vorstehenden Ansprüche, dadurch gekennzeichnet, dass in Kombination mit dem Garnführungsorgan (7) ein Schneidorgan (42) und ein flexibles Element (43) vorgesehen sind, welche auf die dritte Kontakteinrichtung (44) einwirken, nachdem das Garn durchschnitten ist.

9. Pressen für zylindrische Ballen, welche mit einer Vorrichtung nach irgendeinem der Ansprüche 1 bis 8 ausgerüstet sind.

0 060 366

FIG. 1

0 060 366

FIG. 2

2